# EUROPÄISCHE PATENTSCHRIFT

(11) **EP 3 164 731 B1**
(45) Veröffentlichungstag und Bekanntmachung des Hinweises auf die Patenterteilung: **21.11.2018**
(21) Anmeldenummer: 15747371.1
(22) Anmeldetag: 23.06.2015
(51) Int. Cl.: G01S 7/03, G01S 13/04, G01S 13/88, H01Q 21/00, H01Q 21/06, B65G 13/00

(54) **SENSOR FÜR EINE ROLLENBAHN UND VERFAHREN ZUM ERKENNEN VON AUF EINER ROLLENBAHN BEFINDLICHEN OBJEKTEN**
SENSOR FOR A ROLLER CONVEYOR AND METHOD FOR THE DETECTION OF OBJECTS ON THE ROLLER CONVEYOR
CAPTEUR POUR UN CONVOYEUR À GALETS ET PROCÉDÉ DE DÉTECTION D'OBJETS SUR LE CONVOYEUR À GALETS

(30) Priorität: 04.07.2014 DE 102014109399
(43) Veröffentlichungstag der Anmeldung: 10.05.2017
(73) Patentinhaber: Sick AG, 79183 Waldkirch (DE)
(72) Erfinder: PRINZ, Oliver, 79104 Freiburg (DE); KERN, Simon, 79348 Freiamt (DE)
(86) Internationale Anmeldenummer: PCT/DE2015/100256
(87) Internationale Veröffentlichungsnummer: WO 2016/000685

(56) Entgegenhaltungen:
- EP-A1- 2 919 042
- EP-A2- 0 210 946
- EP-A2- 1 624 298
- WO-A1-99/21144
- WO-A1-2009/157791
- DE-A1- 10 131 019
- US-A- 3 812 421

## Beschreibung

Die Erfindung betrifft einen Sensor für eine Rollenbahn und ein Verfahren zum Erkennen von auf einer Rollenbahn befindlichen Objekten nach dem Oberbegriff von Anspruch 1 beziehungsweise 15.

Rollenbahnen werden in der Regel als Rollenförderer in der Lager- und Fördertechnik eingesetzt. Einige der Rollen besitzen einen aktiven Antrieb, der sie in Rotation versetzt. Die übrigen passiven Rollen können über Bänder von den aktiven Rollen mitbewegt werden, oder die in Bewegung versetzten Objekte überbrücken solche Rollen aufgrund der Trägheit. Um den Materialfluss zu steuern, soll die Rollenbahn an bestimmten Positionen der Förderstrecke auf Anwesenheit von Objekten überwacht werden. Dazu sind verschiedenste Sensoren bekannt, wie optische, magnetische, induktive oder kapazitive Sensoren, die am entsprechenden Ort der Förderstrecke angebracht werden, um das Fördergut auf der Rollenbahn zu erfassen.

Die Montage derartiger Sensoren mit geeigneter Befestigungstechnik und Verkabelung zum Anschluss an eine Energieversorgung und ein Kommunikationsnetz, also an eine Steuereinheit oder in Kettenschaltung an weitere Sensoren, erfordert einen erheblichen Aufwand, zusätzlichen Platzbedarf sowie eine Einzeljustage der zahlreichen separat montierten Sensoren. Außerdem sind extern montierte Sensoren prinzipiell anfällig gegen mechanische Beeinträchtigungen durch die Umgebung, wie Verschmutzung oder Beschädigung der Detektionsflächen. Das gilt insbesondere bei optischen Sensoren wie Lichtschranken oder Lichtgittern, die seitlich oder von unten die Rollenbahn beobachten. Der Wartungsaufwand wird dadurch erhöht, und ferner wird eine robuste Gehäuseausführung zum mechanischen Schutz der Sensoren notwendig.

Daher wird im Stand der Technik, etwa der DE 101 31 019 A1, vorgeschlagen, eine Sensorik direkt in Rollen einer Rollenbahn zu integrieren. Die dabei genannten Technologien sind aber lediglich ohne Details aufgelistet und lassen jeweils gravierende Probleme ungelöst. Beispielsweise leidet die Verfügbarkeit optischer Sensoren häufig wegen Verunreinigungen. Andere Prinzipien, wie kapazitive oder induktive Sensoren, können Schwankungen des Sensorsignals aufgrund diverser Fremdeinflüsse, wie Unregelmäßigkeiten der Bewegung der Rolle durch Lagerspiel, Temperaturänderungen, Abnutzung oder Verschmutzung, nicht zuverlässig von den Effekten durch ein Objekt auf der Rolle unterscheiden. Darüber hilft auch nicht hinweg, wenn beispielsweise bei kapazitiven Sensoren Rollen aus Kunststoff ausgeblendet werden sollen, denn es wird nicht erläutert, wie das erreicht werden könnte. Zu einer ebenfalls genannten Ausführungsform mit einem Radar- oder Mikrowellensender bleibt außer der Erwähnung dieser Elemente das Funktionsprinzip gänzlich offen.

Die DE 20 2007 015 529 U1 offenbart eine Rolle für eine Rollenbahn mit einem integrierten kapazitiven Sensor, der zusätzlich auf einer der Förderseite abgewandten Seite einen Referenzsensor vorsieht. Ein Schaltsignal bei einem über die Rolle geförderten Objekt wird dann aus einem Differenzsignal zwischen dem Signal des eigentlichen Sensors und des Referenzsensors bestimmt. Außerdem wird vorgeschlagen, in Längsrichtung der Rolle mehrere Sensoren hintereinander anzuordnen.

Aus der EP 1 624 298 A2 ist ein Mikrowellensensor zur Bestimmung des Wassergehalts bei der Papierherstellung bekannt. Dazu wird ein Signal durch einen Mikrowellenleiter geleitet, der unterhalb der zu prüfenden Materialschicht geführt ist, und die Beeinflussungen des Signals durch Wasser werden ausgewertet.

Die US 3 812 421 offenbart eine Messvorrichtung zur Überprüfung einer Beschichtung, die am Beispiel der Latexbeschichtung eines Teppichs erläutert wird. Als Sensor ist ein Zeitbereichsreflektometer (TDR) vorgesehen, welches die Dielektrizitätskonstante des zwischen zwei TDR-Sonden geführten Teppichs bestimmt.

Die EP 0 210 946 A2 befasst sich mit einem Rollgang für eine Flachmaterial-Walzanlage. Dabei sind als Sensoren zwischen zwei benachbarten Rollen auf den Traversen galvanisch isoliert eine oder mehrere offene metallische Schleifen angeordnet. Sie dienen als Teil eines elektrischen Generatorkreises, an dessen Frequenzverstimmung Anfang oder Ende des Walzguts erkannt wird.

Die WO 2009/157791 A1 beschreibt eine Vorrichtung zum Lesen von RFID-Tags, mit denen ein Erfassungsbereich abgegrenzt wird.

In der WO 99/2144 wird eine RFID-Antenne für einen Förderer vorgestellt.

Es ist daher Aufgabe der Erfindung, eine zuverlässige Anwesenheitserkennung von Objekten auf einer Rollenbahn zu ermöglichen.

Diese Aufgabe wird durch einen Sensor für eine Rollenbahn und ein Verfahren zum Erkennen von auf einer Rollenbahn befindlichen Objekten nach Anspruch 1 beziehungsweise 15 gelöst. Das Sensorelement des Sensors ist in eine Rolle der Rollenbahn integriert. Die Erfindung geht nun von dem Grundgedanken aus, für die Erkennung von Objekten ein Hochfrequenzsignal zu nutzen. Dazu wird sendeseitig ein Hochfrequenzsignal in eine Hochfrequenzleitung des Sensorelements eingespeist und empfangsseitig das resultierende Signal empfangen. Objekte in der Nähe der Hochfrequenzleitung beeinflussen das Hochfrequenzsignal, und dieser Effekt wird bei der Auswertung des empfangenen Hochfrequenzsignals zur Anwesenheitserkennung der Objekte genutzt.

Die Erfindung hat den Vorteil, dass durch Integration in eine Rolle ein nur minimaler Montageaufwand ohne zusätzlichen Platzbedarf ermöglicht wird, bei dem zugleich der Sensor vor äußeren Einflüssen geschützt ist. Dabei ist der Sensor einfach aufgebaut und kommt mit nur geringem Messaufwand aus. Im Gegensatz zu optischen Sensoren ist der auf Hochfrequenzsignalen basierende Sensor unempfindlich gegen Staub und Verunreinigungen. So wird eine besonders robuste, zuverlässige und einfache Anwesenheitserkennung für Objekte auf einer Rollenbahn möglich.

Nicht nur die Hochfrequenzleitung, sondern auch die weiteren Elemente des Sensors sind bevorzugt in die Rolle oder in einen Rahmen der Rollenbahn integriert, wie Sender, Empfänger und Auswertungseinheit. Am kompaktesten ist ein in die Rolle integriertes System, aber auch bei Integration in einen Rahmen der Rollenbahn werden zusätzliche, freiliegende Elemente vermieden und der Platzbedarf verringert. Es ist lediglich noch eine Anschlussleitung für die Versorgung und den Datenanschluss erforderlich. Sogar diese Anschlussleitung kann noch durch drahtlose Kommunikation wie Funk beziehungsweise drahtlose oder autonome Versorgung vermieden werden.

Optional wird das elektromagnetische Feld von der Hochfrequenzleitung zwischen zwei Leitern geführt. Zum Beispiel kann die Hochfrequenzleitung koaxial aufgebaut sein.

In einer Ausführungsform weist die Hochfrequenzleitung mindestens einen Leitungsstreifen auf. Damit wird insbesondere die Hochfrequenzleitung außen auf dem Sensorelement auf einem Substrat geführt. Die Hochfrequenzleitung erstreckt sich für einen großen Erfassungsbereich vorzugsweise über mindestens einen großen Teil oder sogar die volle Länge des Sensorelements. Bei einem Vergleichsbeispiel ist die Hochfrequenzleitung in radialer Richtung bei einem zwischen den Rollen befindlichen, nicht mitdrehenden Sensorelement nach oben zu den möglichen Objekten hin ausgerichtet. Ist die Hochfrequenzleitung nach einem weiteren Vergleichsbeispiel Teil einer Rolle, so führt das Mitdrehen dazu, dass periodisch die Rolle einer Anwesenheitserkennung im Weg ist. Das kann je nach Rollenumfang, Empfindlichkeit des Sensors und Objektgrößen hinnehmbar sein. Erfindungsgemäß werden mehrere Hochfrequenzleitungen über den Umfang des Sensorelements verteilt. Dann ist denkbar, die Hochfrequenzleitungen einzeln auszuwerten und erst nachträglich, also algorithmisch die Ergebnisse zusammenzufassen oder das Hochfrequenzsignal mit einem Splitter beziehungsweise Kombinierer sendeseitig auf die mehreren Leitungsstreifen zu verteilen und empfangsseitig zusammenzufassen. Diese Kombination erfolgt vorzugsweise nicht über alle Leitungsstreifen, sondern nur über Gruppen in einer gemeinsamen radialen Richtung, weil die jeweils im Lauf der Drehbewegung der Rolle von den Objekten abgewandten Leitungsstreifen kaum sinnvolle Messinformation beitragen.

Der Leitungsstreifen weist in einer erfindungsgemäßen Ausführungsform Biegungen auf, um eine größere Fläche abzudecken. Der Leitungsstreifen ist also in dieser Ausführungsform nicht geradlinig geformt, was an sich auch denkbar ist, sondern mäandert beziehungsweise hat Kurven und bedeckt damit eine größere Fläche auf dem Sensorelement, was auch zu einem größeren Erfassungsbereich führt.

Der Leitungsstreifen ist als Mikrostreifenleitung, Schlitzleitung oder Koplanarleitung ausgebildet. Durch deren symmetrische oder unsymmetrische Auslegung oder auch einen Masseschlitz kann die Feldverteilung für eine anwendungsabhängige, verbesserte Anwesenheitserkennung angepasst werden.

Die Hochfrequenzleitung weist in einer weiteren erfindungsgemäßen Ausführungsform einen Hohlleiter auf. Das ist eine Alternative zu einem Hochfrequenzleiter auf der Oberfläche des Sensorelements, bei der das Hochfrequenzsignal in einem metallisch leitenden Hohlraum propagiert wird. Besonders bevorzugt ist die Rolle selbst als Hohlleiter ausgebildet. Ein Dielektrikum im Inneren des Hohlleiters ist möglich. Eine metallische Hülle macht die Rolle besonders widerstandsfähig und langlebig. Dabei kann der Hohlleiter als Rundhohlleiter, Dreieckshohlleiter oder Rechteckhohlleiter ausgebildet sein.

Der Hohlleiter weist in der weiteren erfindungsgemäßen Ausführungsform über seinen Umfang Öffnungen auf und weist bevorzugt über seine Längserstreckung Öffnungen auf. Dadurch kann das Feld nach außen austreten und mit den zu erkennenden Objekten wechselwirken. Eine besonders geeignete Öffnungsform haben Schlitze. Bezüglich der Verteilung von Öffnungen über die Längserstreckung und den Umfang des Sensorelements gelten die obigen Ausführungen zur Verteilung von Leitungsstreifen entsprechend.

Die Hochfrequenzleitung ist bevorzugt als stabförmiges Dielektrikum ausgebildet. Als ein derartiger dielektrischer Wellenleiter hat das Sensorelement einen homogenen Aufbau ohne metallische Hülle oder Strukturen an der Außenseite, die abgerieben werden könnten. Besonders bevorzugt ist die Rolle selbst als das stabförmige Dielektrikum ausgebildet. Im Inneren des Dielektrikums kann ein Hohlraum vorgesehen sein.

Die Auswertungseinheit ist bevorzugt dafür ausgebildet, Objekte anhand von Reflexionen oder Transmissionen des Hochfrequenzsignals auf der Hochfrequenzleitung zu erkennen. Übergänge zu Objekten in der Nähe des Hochfrequenzleiters führen zu einer sprungartigen Änderung der Dielektrizitätskonstante. An solchen Diskontinuitäten wird jeweils ein Teil der ausgesandten Energie reflektiert. Der Zeitverlauf des Hochfrequenzsignals ist letztlich ein Kurvenzug, der Informationen über die Reflexionen oder Echos an den Diskontinuitäten längs der Hochfrequenzleitung enthält. Dieser Kurvenzug kann abgetastet und dann digital in seinem gesamten Informationsgehalt bewertet, aber auch analog beispielsweise anhand von Schwellen ausgewertet werden. Die Echos können in Reflexionsanordnung direkt oder in Transmissionsanordnung indirekt anhand des durch die Reflexion fehlenden Signalanteils ausgewertet werden.

Die Auswertungseinheit ist bevorzugt dafür ausgebildet, einen Reflexionsfaktor, einen Transmissionsfaktor und/oder eine Signallaufzeit des Hochfrequenzsignals bis zu einer Objektkante und daraus die Lage eines erkannten Objekts auf der Rollenbahn zu bestimmen. Das Hochfrequenzsignal liefert mehr Messinformationen als die bloße Anwesenheit, die beispielsweise durch Bestimmung einer Signallaufzeit erfasst wird, um Objektkanten zu lokalisieren. Das ergibt eine Positions- und Größeninformation des Objekts. Durch Mehrfachmessung mit mehreren längs der Rollenbahn angeordneten Sensoren oder Sensorelementen und/oder durch wiederholte Messung unter Berücksichtigung der Fördergeschwindigkeit können diese Positions- und Größeninformationen verfeinert werden.

Die Auswertungseinheit ist bevorzugt dafür ausgebildet, die Amplitude, Frequenz und/oder Phase des Hochfrequenzsignals sendeseitig zu modulieren und diese Modulation empfangsseitig auszuwerten. Damit kann insbesondere ein Signallaufzeitverfahren realisiert werden, beispielsweise ein Phasenverfahren mit Bestimmung des Phasenversatzes, ein Pulsverfahren oder ein FMCW-Verfahren (Frequency Modulated Continuous Wave).

Die Auswertungseinheit ist bevorzugt dafür ausgebildet, die Position eines Referenzabschnitts in dem Hochfrequenzsignal festzulegen und die Anwesenheit eines Objekts anhand einer Verschiebung des Referenzabschnitts zu erkennen. Wiedererkennbare, charakteristische Einflüsse auf das Hochfrequenzsignal, welche als Referenzabschnitte dienen können, entstehen nicht nur dort, wo sich ein Objekt befindet, sondern auch an anderen Übergangsstellen, etwa am Rollenanfang oder Rollenende. Solche Referenzabschnitte treten stets und unabhängig von der Anwesenheit eines Objekts auf. Der Messeffekt ist, dass ein Objekt die Dielektrizitätskonstante und damit die Ausbreitungsgeschwindigkeit des Hochfrequenzsignals in seiner Umgebung verändert. Die resultierende Verschiebung des stets nachweisbaren Referenzabschnitts kann oftmals sogar zuverlässiger ausgewertet werden als der unmittelbare Einfluss des Objekts beispielsweise auf den Signalpegel des Hochfrequenzsignals. Das kann nämlich etwa im Falle dünner, trockener Objekte dazu führen, dass die Änderungen für eine einfache Schwellenauswertung zu niedrig ausfallen.

Die Auswertungseinheit ist bevorzugt dafür ausgebildet, vorab ein Kalibrationssignal in Abwesenheit von Objekten zu bestimmen und dann für die Erkennung von Objekten zu berücksichtigen. Damit werden in einer Art Leerkalibration diejenigen Einflüsse auf das Hochfrequenzsignal erfasst, die nicht von einem zu erkennenden Objekt verursacht sind. Sie werden dann im Betrieb in einfacher Weise durch Abziehen des Kalibrationssignals von dem jeweiligen empfangenen Hochfrequenzsignal berücksichtigt. In einer Ausführungsform, die auf der Verschiebung eines Referenzabschnitts basiert, kann der Signalbereich des Referenzabschnitts von der Kompensation mit dem Kalibrationssignal ausgespart werden. Andererseits verändert eine durch ein Objekt verursachte Verschiebung des Referenzabschnitts das Hochfrequenzsignal auch dann nachweisbar, wenn das Kalibrationssignal den Referenzabschnitt ohne eine solche Verschiebung eliminiert hätte.

Die Auswertungseinheit ist noch bevorzugter dafür ausgebildet, das Kalibrationssignal im Betrieb anhand einer Historie von Hochfrequenzsignalen zu bestimmen oder anzupassen. Hier erfolgt also die Leerkalibration ohne Objekt nicht nur anfänglich, sondern dynamisch. Letztlich handelt es sich vorzugsweise um ein Filter mit Tiefpasseigenschaften, das also schnelle Änderungen durch Objekte und weit zurückliegende Einflüsse auf das Hochfrequenzsignal vergisst. Die Filterparameter sollten so eingestellt sein, dass langsam bewegte Objekte oder Objekte im vorübergehenden Stau noch keine Anpassung auslösen, sondern nur langfristige Effekte wie Ablagerungen an der Rolle. Eine anfängliche Leerkalibration kann als ein Faktor in die Auslegung des Filters eingehen.

In vorteilhafter Weiterbildung ist eine Rolle mit einem darin integrierten erfindungsgemäßen Sensor vorgesehen. Diese Rolle kann einen eigenen Antrieb aufweisen, also eine aktive Rolle sein. Dann nutzt der Sensor vorzugsweise die Versorgungs- und Steuerungsleitungen dieses Antriebs mit. Der Sensor kann aber auch in eine passive Rolle ohne eigenen Antrieb eingesetzt sein. Dann benötigt der Sensor eigene Anschlüsse oder versorgt sich und kommuniziert drahtlos. Denkbar ist auch, den Sensor mit einer Batterie oder einer eigenen Energieerzeugung aus der Drehbewegung auszurüsten.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine Draufsicht auf eine Rollenbahn mit einem in eine Rolle integrierten Sensor zur Anwesenheitserkennung von Objekten auf der Rollenbahn;
- Fig. 2: eine Draufsicht auf eine Rollenbahn mit einem Sensor zur Anwesenheitserkennung von Objekten, dessen Sensorelement zwischen den Rollen angeordnet ist;
- Fig. 3: eine Blockdarstellung eines Sensors mit einem auf der Oberfläche des Sensorelements angeordneten Leitungsstreifen;
- Fig. 4: eine Blockdarstellung einer Ausführungsform eines Sensors mit auf der Oberfläche des Sensorelements angeordneten Leitungsstreifen;
- Fig. 5: eine Ansicht eines Sensorelements in einer Ausführungsform als Hohlleiter mit Öffnungen; und
- Fig. 6: eine Ansicht eines Sensorelements als Dielektrikum mit Hohlraum.

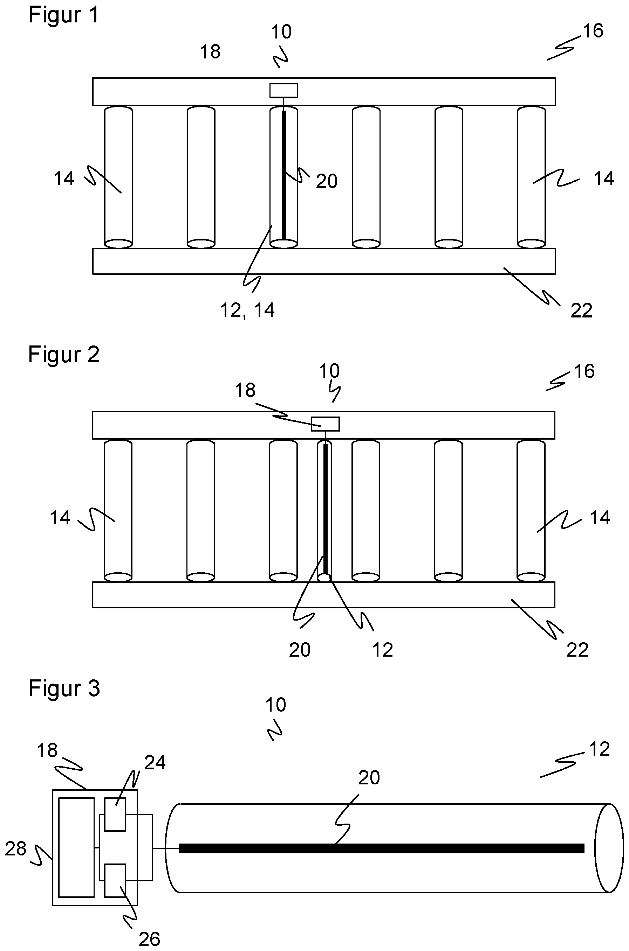

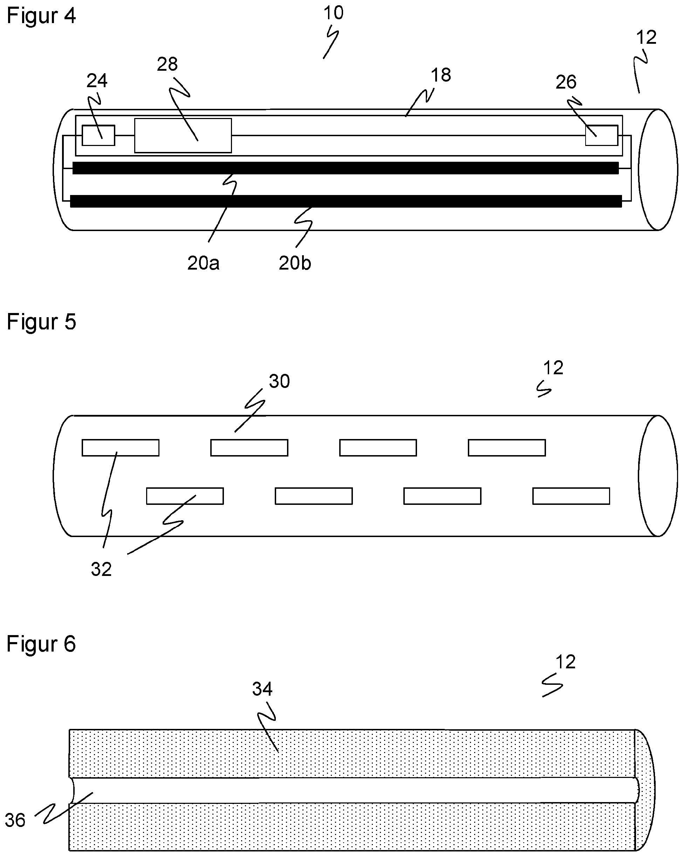

Figur 1 zeigt eine Draufsicht auf einen Sensor 10, dessen Sensorelement 12 in eine Rolle 14 einer Rollenbahn 16 integriert ist. Die Rollen 14 drehen sich aktiv oder passiv durch Mitbewegung mit einem nicht dargestellten Objekt, das sich längs der Rollenbahn 16 bewegt. Der Sensor 10 weist einen Sensorkopf 18 auf, dessen Elemente weiter unten anhand der Figur 3 näher erläutert werden. Das Sensorelement 12 bildet eine Hochfrequenzleitung. Beispielhaft dargestellt ist das Sensorelement 12 mit einem Leitungsstreifen 20, aber es werden im Zusammenhang mit den Figuren 4 bis 6 auch alternative Ausführungsformen als Hohlleiter oder Dielektrikum vorgestellt. Der Sensorkopf 18 ist in der Ausführungsform gemäß Figur 1 in einen Rahmen 22 der Rollenbahn 16 integriert. In anderen Ausführungsformen ist der Sensorkopf 18 ebenfalls in die Rolle 14 eingebaut.

Figur 2 zeigt eine Draufsicht auf eine Anordnung in einem Vergleichsbeispiel, wo das Sensorelement 12 ein separates Bauteil ist, das zwischen den Rollen 14 insbesondere parallel dazu angeordnet ist. In seinem Aufbau kann das separate Sensorelement 12 einer Rolle 14 ähneln, also ebenfalls als Kreiszylinder und aus gleichen Materialien hergestellt sein. Das separate Sensorelement 12 dreht sich aber nicht unbedingt mit, sondern kann auch drehfest in dem Rahmen 22 gelagert sein und einen anderen Durchmesser aufweisen als eine Rolle 14.

Figur 3 zeigt eine Blockdarstellung des Sensors 10. Der Sensorkopf 18 weist einen Sender 24, einen Empfänger 26 sowie eine damit verbundene Steuer- und Auswertungseinheit 28 auf. Die Kopplung auf die Hochfrequenzleitung des Sensorelements 12 erfolgt beispielsweise kapazitiv oder direkt durch ein Verbindungsstück.

Das Sensorelement 12 ist hier und in allen folgenden Darstellungen in einem Vergleichsbeispiel ein separates Bauteil oder erfindungsgemäß in die Rolle 14 integriert. Auf der Oberfläche des Sensorelements 12 ist in einem Vergleichsbeispiel eine Hochfrequenzleitung als Leitungsstreifen 20 beziehungsweise Leitung auf einem Substrat geführt. Der Leitungsstreifen 20 kann mit einer homogenen Impedanz ausgelegt werden, so dass das Maximum der eingespeisten Energie am Ausgang des Leitungsstreifens 20 zur Verfügung steht. In einer Ausführung des Leitungsstreifens 20 als Mikrostreifenleitung wird die Welle des Hochfrequenzsignals zwischen einer Massefläche des Substrats und der eigentlichen Leitung geführt. Das Substrat bestimmt durch seine Dielektrizitätskonstante zusammen mit dem Abstand zwischen Massefläche und Leitung die Impedanz.

Die Impedanz wird auch beeinflusst, wenn die Dielektrizitätskonstante oberhalb des Leitungsstreifens 20 nicht diejenige der Luft, sondern größer ist, also die metallische Schicht nochmals durch ein Dielektrikum abgedeckt wird. Die Intensität des Feldes außerhalb des Substrats ist somit durch Wahl des Verhältnisses der Dielektrizitätskonstanten oberhalb der Leitung sowie zwischen Leitung und Massefläche beeinflussbar. Dadurch wird ein noch größerer Anteil der Energie des Hochfrequenzsignals nicht innerhalb des Leitungsstreifens, sondern in der Luft darüber geführt. Die Leitungseigenschaften werden dann bei Annäherung eines Objekts verändert, woran dessen Anwesenheit erkannt wird.

Abweichend von der geradlinigen Darstellung wird der Leitungsstreifen 20 in einer weiteren erfindungsgemäßen Ausführungsform gewunden beziehungsweise mit Kurven ausgeführt und nimmt dann in Umfangsrichtung zusätzliche Fläche auf der Oberfläche des Sensorelements 12 ein. So wird eine bessere Abdeckung des Detektionsbereichs erreicht. Ein spezieller Ansatz für die Detektion von Objekten, der gleichzeitigen ESD Schutz bietet, ist die Mikrostreifenleitung mit Masseschlitz. Dabei wird die eigentliche Leitung der Mikrostreifenleitung in Richtung Innenseite des Sensorelements 12 angeordnet, und die Außenseite des Sensorelements 12 entspricht dann der Massefläche. Diese wird geschlitzt, und ein Teil des Feldes reicht durch den Masseschlitz hinaus.

Alternativ zu Mikrostreifenleitungen kommen auch Schlitzleitungen sowie symmetrische und unsymmetrische Koplanarleitungen in Betracht. Hier wird bereits ein noch größerer Anteil der Energie in der Luft geführt, so dass eine größere Beeinflussung durch anwesende Objekte und damit eine verbesserte Objekterkennung ermöglicht wird. Denkbar sind auch noch andere Leitungstypen wie koplanare Zweibandleitung, Doppelbandleitung und andere. Auch wenn es nicht unter eine Ausführungsform als Leitungsstreifen fällt, soll ergänzend auch die Möglichkeit erwähnt werden, die Rolle 14 als Oberflächenwellenleiter zu nutzen.

Figur 4 zeigt eine weitere erfindungsgemäße Ausführungsform des Sensors 10 mit Leitungsstreifen 20a-b. Im Unterschied zu Figur 3 sind hier mehrere Leitungsstreifen 20a-b vorgesehen, wobei beispielhaft lediglich zwei eingezeichnet sind. Außerdem ist der Sensorkopf 18 in die Rolle integriert, und das Hochfrequenzsignal wird nun nicht mehr in Reflexion, sondern in Transmission empfangen. Alle diese in verschiedenen Figuren gezeigten Variationen der Anordnung der Elemente des Sensorkopfes 18 sind beliebig kombinierbar. Die Leitungsstreifen 20a-b sind über den Umfang verteilt. Die Auswertung kann für jeden Leitungsstreifen 20a-b einzeln oder durch Zusammenschalten von einigen oder allen Leitungsstreifen 20a-b mittels Kopplerelementen (Power Splitter, Power Combiner) an Eingang und Ausgang der Leitungsstreifen 20a-b gemeinsam erfolgen. Bei einer Messung zur Anwesenheitserkennung von Objekten auf der Rollenbahn 16 wird nun von dem Sender 24 ein Hochfrequenzsignal erzeugt und auf den Leitungsstreifen 20 eingekoppelt. Ein Teil der Leistung wird im Substrat und ein weiterer Teil in der Luft geführt. Durch das Näherbringen eines Objekts und damit eines Materials mit einer sich von der Umgebung unterscheidenden Dielektrizitätskonstante wird das Feld der Leitung gestört, was sich in einer Impedanzänderung ausdrückt, die umso größer ist, je näher das Objekt dem Leitungsstreifen 20 kommt und je größer dessen Dielektrizitätskonstante ist. Diese Impedanzänderung führt zu einer partiellen Reflexion der Welle an dieser Stelle, wobei der reflektierte Anteil von der Impedanzänderung abhängt. Die Auswertung kann je nach Ausführungsform wie in Figur 3 durch Detektion der reflektierten Welle am Leitungseingang oder wie in Figur 4 der transmittierten Welle erfolgen, die um den Anteil der reflektierten Energie geringer ist.

Eine einfache Möglichkeit, die Anwesenheit von Objekten festzustellen, ist eine Überwachung, ob überhaupt ein signifikanter Teil der Welle reflektiert wurde. Dabei sollte der Vergleich mit einer Referenz erfolgen, da fast immer eine Teilreflexion unabhängig von Objekten durch Teile des Sensors 10 oder der Rollenbahn 16 verursacht wird. Das kann durch eine Schwellbewertung geschehen, wobei die Schwelle im Kontext der gewünschten Empfindlichkeit des Systems, etwa ob kleine Objekte wie Briefe erkannt werden sollen, und der Störeinflüsse wie Verschmutzung, Feuchtigkeit und EMV gewählt wird. Diese Schwelle kann das zeitabhängige Hochfrequenzsignal bewerten oder einen summarischen Koeffizienten wie den Reflexions- oder Transmissionsfaktor. Denkbar ist weiterhin ein Vergleich mit einem Referenzkanal oder einem vorgespeicherten Referenzsignal.

Aus der zeitlichen Position der reflektierten Signalanteile innerhalb des Hochfrequenzsignals kann die Auswertungseinheit 28 nicht nur binär auf die Anwesenheit von Objekten schließen, sondern über ein Signallaufzeitverfahren auch die Position der Impedanzänderung und damit die Objektposition bestimmen. So kann zumindest die Position der vordersten Kante eines Objekts erfasst werden. Bei der Bestimmung der Position hinterer Kanten eines Objekts, welche eine Größeninformation über das Objekt liefern, oder weiterer Objekte auf demselben Sensorelement 12 ist zu beachten, dass hier das anwesende Objekt die Signalausbreitung bereits verzögert. Deshalb kann die hintere Kante nur grob geschätzt oder anhand von Wissen oder Annahmen über die Dielektrizitätskonstante des Objekts bestimmt werden. Zumindest wird aber die für sich wertvolle Erkenntnis gewonnen, dass mehrere Objekte auf demselben Sensorelement 12 anwesend sind. Wie schon mehrfach erwähnt, sind die Informationen über reflektierte Signalanteile sowohl im reflektierten als auch im transmittierten Hochfrequenzsignal enthalten.

Um die Laufzeit zu bestimmen, wird das Hochfrequenzsignal in Amplitude, Frequenz und/oder Phase moduliert. Eine Amplitudenmodulation entspricht einem Pulslaufzeitverfahren, wobei die Amplitude aber nicht notwendig pulsförmig moduliert wird, solange nur ein eindeutiges Zeitverhalten ablesbar bleibt, wie beispielsweise bei Mehrfachpulsen oder Sprungfunktionen. Eine Phasenmodulation ermöglicht die Bestimmung der Phasenverschiebung zwischen ausgesandtem und empfangenem Hochfrequenzsignal. Ein Beispiel für ein Verfahren mit Frequenzmodulation ist FMCW.

Figur 5 zeigt eine alternative erfindungsgemäße Ausführungsform des Sensorelements 12 als Hohlleiter 30. Erneut kann eine Rolle 14 als Hohlleiter 30 ausgebildet oder in einem Vergleichsbeispiel ein separater Hohlleiter 30 zwischen den Rollen 14 angeordnet werden. Der Hohlleiter 30 weist Öffnungen 32 oder Schlitze auf, an denen Leistung ausgekoppelt wird. Die Anzahl, Geometrie und Anordnung der Öffnungen 32 werden so ausgelegt, dass die Anwesenheit von Objekten möglichst zuverlässig erkannt wird. Je nachdem, ob das Sensorelement 12 rotiert oder nicht, genügen Öffnungen 32 an der Oberseite oder es sind erfindungsgemäß Öffnungen 32 über den gesamten Umfang zu verteilen.

In dem Hohlleiter 30 wird elektromagnetische Energie von der Einspeisung bis zur Auskopplung transportiert. Die elektromagnetische Welle bildet je nach Anregung eine oder mehrere Moden im Hohlleiter 30 aus. Ausbreitungsfähig sind nur Wellen, die auch eine Feldkomponente in Ausbreitungsrichtung besitzen (E- oder H-Komponente). Die Feldverteilung wird als Mode bezeichnet. Jede Mode hat eine untere Grenzfrequenz, die von der Geometrie des Hohlleiters 30 abhängt, ab derer sie ausbreitungsfähig ist. Der Hohlleiter 30 wirkt als Hochpassfilter. Gibt es Störungen im Hohlleiter 30, ändert sich die Feldverteilung, also die Mode oder das Modengemisch als Superposition von mehreren Moden.

Zur Detektion eines Objektes werden die Öffnungen 32 in den Hohlleiter 30 eingebracht, um die metallische Barriere zwischen Hochfrequenzfeld und Objekt partiell zu entfernen. Dadurch wird ein Teil des Feldes nach außen gekoppelt, der Großteil bleibt jedoch im Hohlleiter. Eine Kopplung des Feldes nach außen geschieht nur, wenn Wandströme in der Wand des Hohlleiters 30 geschnitten werden. Diese Wandströme entsprechen einer Weiterführung des Feldes in der metallischen Wand. Aus dieser Bedingung wird die Feldverteilung im Hohlleiter 30 optimiert, und so ergeben sich die geeigneten Anzahlen, Geometrien und/oder Positionen der Öffnungen 32. Die Feldverteilung kann durch das teilweise oder vollständige Füllen des Hohlleiters 30 mit einem Dielektrikum beeinflusst werden, um die Wellenlänge im Material zu verkürzen und damit kleinere Abstände zwischen den Öffnungen 32 zu ermöglichen, damit eine Mode bei einer bestimmten Frequenz noch ausbreitungsfähig ist oder um die Kopplung durch die Öffnungen zu optimieren.

Der durch Öffnungen 32 gestörte Hohlleiter 30 lässt Feld durch die Öffnungen 32 nach außen treten. Gleichzeitig kann durch die Löcher wiederum Feld in den Hohlleiter 30 eindringen, das sich mit den Feldern im Hohlleiter 30 überlagert. Deshalb wird ein Objekt, das sich in der Nähe einer Öffnung 32 befindet, vom Feld durchdrungen. An dem Sprung der Dielektrizitätskonstanten zwischen Luft und Objekt entsteht nun ganz ähnlich wie im oben beschriebenen Fall eines Leitungsstreifens 20 ein transmittierter und reflektierter Anteil der Welle. Der reflektierte Anteil breitet sich in Richtung der Öffnung 32 im Hohlleiter 30 aus und wird wieder in den Hohlleiter 30 gekoppelt. Je größer der Sprung der Dielektrizitätskonstante zwischen Luft und Objekt ist, desto mehr Leistung wird reflektiert, und entsprechend viel Leistung kommt wieder im Hohlleiter 30 an. Deshalb kann die Veränderung des eingespeisten Hochfrequenzsignals in Reflexionsmessung am Beginn oder in Transmissionsmessung am Ende des Hohlleiters 30 detektiert werden. Dabei sind die gleichen Auswertungen beispielsweise mit Schwellen, Reflexions- oder Transmissionskoeffizient, Referenzvergleich und Signallaufzeitmessung sowie die gleichen Modulationen in Amplitude, Phase und Frequenz möglich. Das Abdecken von Öffnungen 32 hat im Übrigen im Vergleich lediglich dem Annähern eines Objekts einen wesentlich größeren Effekt, und gerade bei einer Rolle 14 als Sensorelement 12 kommt es durch die Förderbewegung regelmäßig zu einem Abdecken.

Figur 6 zeigt ein Vergleichsbeispiel des Sensorelements 12 als Dielektrikum 34. Wiederum kann eine Rolle 14 als Dielektrikum 34 ausgebildet oder ein separates Dielektrikum 34 zwischen den Rollen 14 angeordnet werden. Das Dielektrikum 34 beziehungsweise der dielektrische Wellenleiter ist im Unterschied zum Hohlleiter 30 ohne eine metallisch leitende Begrenzung aufgebaut. Der Wellenleitereffekt besteht aufgrund des Sprungs der Dielektrizitätskonstanten zwischen dem Dielektrikum 34 und seiner Umgebung. Typischerweise sollte ein Dielektrikum mit im Vergleich zur umgebenden Luft hoher Dielektrizitätskonstante gewählt werden, wobei das Material aber auch den Beanspruchungen als Rolle 14 standhalten sollte.

## Patentansprüche

1. Rolle (14) mit einem Sensor (10) für eine Rollenbahn (16), wobei der Sensor (10) einen Sender (24), einen Empfänger (26), ein Sensorelement (12), das in die Rolle (14) integriert ist, und eine Auswertungseinheit (28) zum Erkennen von auf der Rollenbahn (16) befindlichen Objekten anhand eines Sensorsignals des Sensorelements (12) umfasst, wobei das Sensorelement (12) eine Hochfrequenzleitung (20, 30, 34) aufweist und wobei das Sensorsignal ein von dem Sender (24) in die Hochfrequenzleitung (20, 30, 34) eingespeistes und anschließend in dem Empfänger (26) empfangenes Hochfrequenzsignal ist, wobei die Auswertungseinheit (28) dafür ausgebildet ist, die Anwesenheit von Objekten anhand von Beeinflussungen des Hochfrequenzsignals auf der Hochfrequenzleitung (20, 30, 34) zu erkennen,
**dadurch gekennzeichnet,**
**dass** die Hochfrequenzleitung (20, 30, 34) ausgestaltet ist als
- mehrere über den Umfang der Rolle (14) verteilte Hochfrequenzleitungen (20a-b),
- mindestens ein gewundener Leitungsstreifen (20), der als Mikrostreifenleitung, Schlitzleitung oder Koplanarleitung ausgebildet ist und dessen Kurven in Umfangsrichtung zusätzliche Fläche auf der Oberfläche des Sensorelements (12) einnehmen oder
- ein Hohlleiter (30) mit über den Umfang verteilten Öffnungen (32).

2. Rolle (14) nach Anspruch 1,
wobei die Hochfrequenzleitung das Feld zwischen zwei Leitern führt.

3. Rolle (14) nach Anspruch 1 oder 2,
wobei die Rolle (14) als Hohlleiter (30) ausgebildet ist und der Hohlleiter (30) über seine Längserstreckung Öffnungen (32) aufweist und/oder mit Dielektrikum gefüllt ist.

4. Rolle (14) nach Anspruch 3,
wobei der Hohlleiter (30) als Rundhohlleiter, Dreieckshohlleiter oder Rechteckhohlleiter ausgebildet ist.

5. Rolle (14) nach einem der vorhergehenden Ansprüche,
wobei die Auswertungseinheit (28) dafür ausgebildet ist, Objekte anhand von Reflexionen oder Transmissionen des Hochfrequenzsignals auf der Hochfrequenzleitung (20, 30, 34) zu erkennen.

6. Rolle (14) nach einem der vorhergehenden Ansprüche,
wobei die Auswertungseinheit (28) dafür ausgebildet ist, einen Reflexionsfaktor, einen Transmissionsfaktor und/oder eine Signallaufzeit des Hochfrequenzsignals bis zu einer Objektkante und daraus die Lage eines erkannten Objekts auf der Rollenbahn (16) zu bestimmen.

7. Rolle (14) nach einem der vorhergehenden Ansprüche,
wobei die Auswertungseinheit (28) dafür ausgebildet ist, die Amplitude, Frequenz und/oder Phase des Hochfrequenzsignals sendeseitig zu modulieren und diese Modulation empfangsseitig auszuwerten.

8. Rolle (14) nach einem der vorhergehenden Ansprüche,
wobei die Auswertungseinheit (28) dafür ausgebildet ist, die Position eines Referenzpulses in dem Hochfrequenzsignal festzulegen und die Anwesenheit eines Objekts anhand einer Verschiebung des Referenzpulses zu erkennen.

9. Rolle (14) nach einem der vorhergehenden Ansprüche,
wobei die Auswertungseinheit (28) dafür ausgebildet ist, vorab ein Kalibrationssignal in Abwesenheit von Objekten zu bestimmen und dann für die Erkennung von Objekten zu berücksichtigen und insbesondere das Kalibrationssignal im Betrieb anhand einer Historie von Hochfrequenzsignalen zu bestimmen oder anzupassen.

10. Verfahren zum Erkennen von auf einer Rollenbahn (16) befindlichen Objekten durch Auswertung eines Sensorsignals eines Sensorelements (12), das in eine Rolle (14) der Rollenbahn (16) integriert ist, wobei als Sensorsignal ein Hochfrequenzsignal in eine Hochfrequenzleitung (20, 30, 34) des Sensorelements (12) eingespeist und anschließend empfangen und ausgewertet wird, um die Anwesenheit von Objekten anhand von Beeinflussungen des Hochfrequenzsignals auf der Hochfrequenzleitung (20, 30, 34) zu erkennen,
**dadurch gekennzeichnet,**
**dass** die Hochfrequenzleitung (20, 30, 34) ausgestaltet ist als
- mehrere über den Umfang der Rolle (14) verteilte Hochfrequenzleitungen (20a-b),
- mindestens ein gewundener Leitungsstreifen (20), der als Mikrostreifenleitung, Schlitzleitung oder Koplanarleitung ausgebildet ist und dessen Kurven in Umfangsrichtung zusätzliche Fläche auf der Oberfläche des Sensorelements (12) einnehmen oder
- ein Hohlleiter (30) mit über den Umfang verteilten Öffnungen (32).

## Claims

1. A roller (14) with a sensor (10) for a roller track (16), wherein the sensor (10) comprises a transmitter (24), a receiver (26), a sensor element (12) which is integrated into the roller (14), and an evaluation (28) unit for detecting objects located on the roller track (16) using a sensor signal of the sensor element (12), wherein the sensor element (12) comprises a high frequency line (20, 30, 34) and wherein the sensor signal is a high frequency signal fed into the high frequency line (20, 30, 34) by the transmitter (24) and subsequently received in the receiver (26), wherein the evaluation unit (28) is configured to detect the presence of objects with reference to influences of the high frequency signal on the high frequency line (20, 30, 34),
**characterized in that** the high frequency line (20, 30, 34) is configured as
- several high frequency lines (20a-b) distributed over the circumference of the roller (14),
- at least one winded conductor strip (20) which is configured as a microstrip line, slot line or coplanar line and whose curves cover additional area on the surface of the sensor element (12) in a circumferential direction or
- a hollow line (30) having holes (32) distributed over the circumference.

2. The roller (14) in accordance with claim 1,
wherein the high frequency line guides the field between two conductors.

3. The roller (14) in accordance with claim 1 or 2,
wherein the roller (14) is configured as a hollow conductor (30) and the hollow conductor (30) comprises openings (32) over its longitudinal extension and/or is filled with dielectric material.

4. The roller (14) in accordance with claim 3,
wherein the hollow conductor (30) has a round, triangular or rectangular cross section.

5. The roller (14) in accordance with any of the preceding claims,
wherein the evaluation unit (28) is configured to detect objects with reference to reflections or transmissions of the high frequency signal on the high frequency line (20, 30, 34).

6. The roller (14) in accordance with any of the preceding claims,
wherein the evaluation unit (28) is configured to determine a reflection factor, a transmission factor and/or a signal transit time of the high frequency signal up to an object edge and to determine the position of a detected object on the roller track (16) from that.

7. The roller (14) in accordance with any of the preceding claims,
wherein the evaluation unit (28) is configured to modulate at least one of the amplitude, frequency and phase of the high frequency signal at the transmission side and to evaluate this modulation at the reception side.

8. The roller (14) in accordance with any of the preceding claims,
wherein the evaluation unit (28) is configured to define the position of a reference pulse in the high frequency signal und to detect the presence of an object based on a shift of the reference pulse.

9. The roller (14) in accordance with any of the preceding claims,
wherein the evaluation unit (28) is configured to determine a calibration signal in the absence of objects in advance and then to take it into account for the detection of objects, in particular to determine or to adapt the calibration signal in operation on the basis of a history of high frequency signals.

10. A method of detecting objects located on a roller track (16) by evaluating a sensor signal of a sensor element (12) which is integrated into a roller (14) of the roller track (16), wherein a high frequency signal is fed, as the sensor signal, into a high frequency line (20, 30, 34) of the sensor element (12) and is subsequently received and evaluated to detect the presence of objects on the basis of influences of the high frequency signal on the high frequency line (20, 30, 34),
**characterized in that** the high frequency line (20, 30, 34) is configured as
- several high frequency lines (20a-b) distributed over the circumference of the roller (14),
- at least one winded conductor strip (20) which is configured as a microstrip line, slot line or coplanar line and whose curves cover additional area on the surface of the sensor element (12) in a circumferential direction or
- a hollow line (30) having holes (32) distributed over the circumference.

## Revendications

1. Rouleau (14) comportant un capteur (10) pour une voie à rouleaux (16), le capteur (10) comportant un émetteur (24), un récepteur (26), un élément capteur (12) qui est intégré dans le rouleau (14), et une unité d'évaluation (28) pour reconnaître des objets situés sur la voie à rouleaux (16) à l'aide d'un signal de capteur de l'élément capteur (12), dans lequel l'élément capteur (12) comprenant une ligne à haute fréquence (20, 30, 34) et dans lequel le signal de capteur étant un signal haute fréquence injecté par l'émetteur (24) dans la ligne haute fréquence (20, 30, 34) et ensuite reçu dans le récepteur (26), l'unité d'évaluation (28) étant réalisée pour reconnaître la présence d'objets à l'aide d'influences du signal haute-fréquence sur la ligne haute-fréquence (20, 30, 34),
**caractérisé en ce que**
la ligne haute-fréquence (20, 30, 34) est conçue sous forme de
- plusieurs lignes haute-fréquence (20a - b) réparties sur la périphérie du rouleau (14),
- au moins un ruban de ligne sinueux (20) qui est réalisé sous forme de ligne micro-ruban, de ligne à fente ou de ligne coplanaire et dont les courbes en direction périphérique occupent une face supplémentaire sur la surface de l'élément capteur (12), ou sous forme de
- conducteur creux (30) ayant des ouvertures (32) réparties sur la périphérie.

2. Rouleau (14) selon la revendication 1,
dans lequel la ligne haute-fréquence mène le champ entre deux conducteurs.

3. Rouleau (14) selon la revendication 1 ou 2,
dans lequel le rouleau (14) est réalisé sous forme de conducteur creux (30), et sur son extension en longueur le conducteur creux (30) présente des ouvertures (32) et/ou est rempli d'un diélectrique.

4. Rouleau (14) selon la revendication 3,
dans lequel le conducteur creux (30) est réalisé sous forme de conducteur creux rond, de conducteur creux triangulaire ou de conducteur creux rectangulaire.

5. Rouleau (14) selon l'une des revendications précédentes,
dans lequel l'unité d'évaluation (28) est réalisée pour reconnaître des objets à l'aide de réflexions ou de transmissions du signal haute-fréquence sur la ligne haute-fréquence (20, 30, 34).

6. Rouleau (14) selon l'une des revendications précédentes,
dans lequel l'unité d'évaluation (28) est réalisée pour déterminer un facteur de réflexion, un facteur de transmission et/ou un temps de parcours du signal haute-fréquence jusqu'à une arête de l'objet et pour en déterminer la position d'un objet reconnu sur la voie à rouleaux (16).

7. Rouleau (14) selon l'une des revendications précédentes,
dans lequel l'unité d'évaluation (28) est réalisée pour moduler l'amplitude, la fréquence et/ou la phase du signal haute-fréquence du côté émission et pour évaluer cette modulation du côté réception.

8. Rouleau (14) selon l'une des revendications précédentes,
dans lequel l'unité d'évaluation (28) est réalisée pour fixer la position d'une impulsion de référence dans le signal haute-fréquence et pour reconnaître la présence d'un objet à l'aide d'un décalage de l'impulsion de référence.

9. Rouleau (14) selon l'une des revendications précédentes,
dans lequel l'unité d'évaluation (28) est réalisée pour déterminer préalablement un signal de calibration en absence d'objets et pour le prendre alors en compte pour la reconnaissance d'objets et pour déterminer ou adapter en particulier le signal de calibration pendant le fonctionnement à l'aide d'un historique de signaux haute-fréquence.

10. Procédé pour reconnaître des objets situés sur une voie à rouleaux (16) par évaluation d'un signal de capteur d'un élément capteur (12) qui est intégré dans le rouleau (14) de la voie à rouleaux (16), dans lequel un signal haute fréquence est injecté en tant que signal de capteur dans une ligne haute fréquence (20, 30, 34) de l'élément capteur (12) et est ensuite reçu et évalué, afin de reconnaître la présence d'objets à l'aide d'influences du signal haute-fréquence sur la ligne haute-fréquence (20, 30, 34),
**caractérisé en ce que**
la ligne haute-fréquence (20, 30, 34) est conçue sous forme de
- plusieurs lignes haute-fréquence (20a - b) réparties sur la périphérie du rouleau (14),
- au moins un ruban de ligne sinueux (20) qui est réalisé sous forme de ligne micro-ruban, de ligne à fente ou de ligne coplanaire et dont les courbes en direction périphérique occupent une face supplémentaire sur la surface de l'élément capteur (12), ou sous forme de
- conducteur creux (30) ayant des ouvertures (32) réparties sur la périphérie.
